Europäisches Patentamt

European Patent Office

Office européen des brevets

(11) Publication number: **0 083 985**
**B1**

(12) **EUROPEAN PATENT SPECIFICATION**

(45) Date of publication of patent specification: **06.04.88**

(51) Int. Cl.⁴: **G 01 S 7/52,** G 01 S 7/62, G 06 F 15/20

(21) Application number: **83300111.8**

(22) Date of filing: **10.01.83**

(54) Improved ultrasonic image storage system.

(30) Priority: **11.01.82 US 338731**
**11.01.82 US 338730**

(43) Date of publication of application:
**20.07.83 Bulletin 83/29**

(45) Publication of the grant of the patent:
**06.04.88 Bulletin 88/14**

(84) Designated Contracting States:
**DE FR GB**

(56) References cited:
**EP-A-0 040 025**
**EP-A-0 060 694**
**GB-A-2 069 264**
**US-A-4 234 937**
**US-A-4 275 595**
**US-A-4 289 140**

**IEEE TRANSACTIONS ON SONICS AND
ULTRASONICS, vol. SU-21, no. 2, April 1974,
New York (USA); DIANA H. McSHERRY:
"Computer Processing of Diagnostic
Ultrasound Data", pages 91-97**

(73) Proprietor: **TECHNICARE CORPORATION**
**90 Inverness Circle East**
**Englewood Colorado 80112 (US)**

(72) Inventor: **Carmen, Ralph H.**
**RD3 Concord Road**
**Lebanon New Jersey 08833 (US)**

(74) Representative: **Colgan, Stephen James et al**
**CARPMAELS & RANSFORD 43 Bloomsbury
Square**
**London WC1A 2RA. (GB)**

(56) References cited:
**WESCON67 TECNICAL PAPTERS, vol. 11, no. 3,
Session 6, 22nd-25th August 1967, North
Hollywood (US); G.M. LOH: "Mechanization of
a Digital Compressor for Biomedical Data",
paper 6/1, pages 1-12**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates, in general, to ultrasonic imaging, and, in particular, relates to an improved technique and device for storing and retrieving ultrasonic images of the type used in medical diagnostics.

Ultrasonic imaging has found increased utility in the field of medical diagnosis. For example, ultrasonic imaging is utilized extensively for the detection and diagnosis of mammarian cancer. It is also utilized to ascertain various stages of fetal development. A major problem encountered with ultrasonic imaging has been the need to find a suitable technique for storing and retrieving the vast quantities of data generated when ultrasonic imaging techniques are employed. One technique employed for storing such data is to store information on photographic film. However, a typical mammarian scan for a single patient may comprise as many as sixty pages of photographs per patient with four photographs per page. Because of the unwieldy nature of such photographic records, less than a complete set of records may be collected and maintained for a given patient. Since record selection is generally done by a technician, the technician's judgment as to which data should be collected and which discarded may be substituted for that of the physician.

To alleviate the disadvantage of unwieldy photographic records of ultrasonic imaging, digital storage of such images has been proposed. However, ultrasonic imaging generates large quantities of digital data. While digital data storage techniques are available to store large quantites of digital data, retrieving such information may be sufficiently time consuming so as to be undesirable for a busy physician. One alternative is to provide a minimum digital storage capacity and to simply collect less data. In this manner, information retrieval time may be minimized but fewer than the optimum number of records per patient may be stored. Alternatively, if many records per patient are stored, but with data density for each record reduced, the image resolution record may be less than optimum.

US—A—4 234 937 (Eggelton et al.) discloses a digital electronic system for improving the resolution of dynamic range-handling capacity for received ultrasound in reflection or transmission imaging systems. The disclosed ultrasonic tissue imaging system comprises an ultrasonic transducer, input imaging means for converting signals received by said transducer to an analog video input signal, means for producing a first series of digital amplitude samples representative of said video input signal, and display means responsive to a video output signal for producing an image of said tissue.

It would be desirable to provide an improved ultrasonic image data storage and retrieval technique and device which utilized minimum digital storage capacity.

It would be still further desirable to provide such an ultrasonic image storage and retrieval device and technique which utilizes minimum storage capacity and yet which is capable of storing all imaging data which is diagnostically significant.

It would be still further desirable to provide such an ultrasonic image storage and retrieval device and technique having the capability for information retrieval in a short period of time.

It would be still further desirable to provide such a device and technique which permits the storage of more patient records in a memory of a given size without appreciable loss of resolution.

The foregoing needs are met by the present invention which takes advantage of the fact that an ultrasonic image is more highly variable in a direction along the axis of the ultrasonic transducer than in a direction transverse to that axis. Thus, the frequency of the axial component of a video signal representing an ultrasonic image is higher than the frequency of the transverse component. Because the frequency of the transverse component of the video signal is relatively low, a storage and retrieval technique may be employed wherein the memory density allocated for storage of the transverse component is decreased without loss of axial resolution and without noticeable loss of transverse resolution.

In accordance with the present invention, the aforementioned objects are achieved by the system of claim 1.

Since the second series of samples comprises fewer elements than the first series of samples, memory density may be decreased. However, since the second series of samples is the average of elements from the first series of samples, the second series of samples provides a reasonable approximation of the original video input signal. Since the frequency of the transverse component of the ultrasonic image is relatively low, such an approximation is sufficiently accurate faithfully to reproduce an ultrasonic image.

Preferably, following production of the second series of samples, compressing means is provided for producing a third series of digital signals from the second digital signal series. In accordance with a preferred aspect of the present invention, the third digital signal series is a non-linear function of the second digital signal series, the non-linear function being such as to provide increased granularity in regions of greater interest from a diagnostic standpoint and decreased granularity in regions of lesser interest. A means for storing and retrieving the third digital signal series is provided and an expanding means is provided to reconstitute the second digital signal series from the retrieved third digital signal series. The reconstituted second digital signal series is thereafter smoothed and converted to analog form for video display. Since the stored digital signal employs increased granularity in regions of high interest, resolution in regions of interest is improved at the expense of slightly increased distortion in regions of low diagnostic interest.

In accordance with the aforementioned preferred aspect of the present invention, which is also made the subject matter of a divisional application (EP—A—0 181 677), when ultrasonic imaging is utilized for the detection and diagnosis of, for example, mammarian cancer, low amplitude video input signals correspond to areas of possible malignancy. Accordingly, in accordance with said preferred aspect of the present invention, granularity of the stored digital signal is increased by the compressing means for low level signals and decreased for high level signals. This is accomplished by insuring that the compressing means produces a third digital signal series which is a monotonically increasing function of the second digital signal series, the function having a monotonically decreasing slope. Further, the expanding means provides that the reconstituted digital signal produced thereby is a monotonically increasing function of the third digital signal series input thereto with a monotonically increasing slope.

The present invention will be more fully understood by reference to the accompanying drawings, in which:

Fig. 1 is a general block diagram if an ultrasonic imaging system employing the novel image storage and retrieval means of the present invention;

Fig. 2 is a schematic diagram of the image storage and retrieval means of Fig. 1;

Fig. 3 is a schematic circuit diagram of the video input processing circuit of Fig. 2;

Fig. 3A is a plot of the amplitude of a video input signal versus time at the input of the video input processing circuit of Fig. 2;

Fig. 3B is a plot of amplitude versus time of the signal at the input to the compressing means of Fig. 3;

Fig. 4 is a plot of the transfer function of the compressing means of the video input processing circuit of Fig. 3;

Fig. 5 is a schematic circuit diagram of the video output processing circuit shown in Fig. 2; and

Fig. 6 is a plot of the transfer function of the expanding means of the video output processing circuit of Fig. 5.

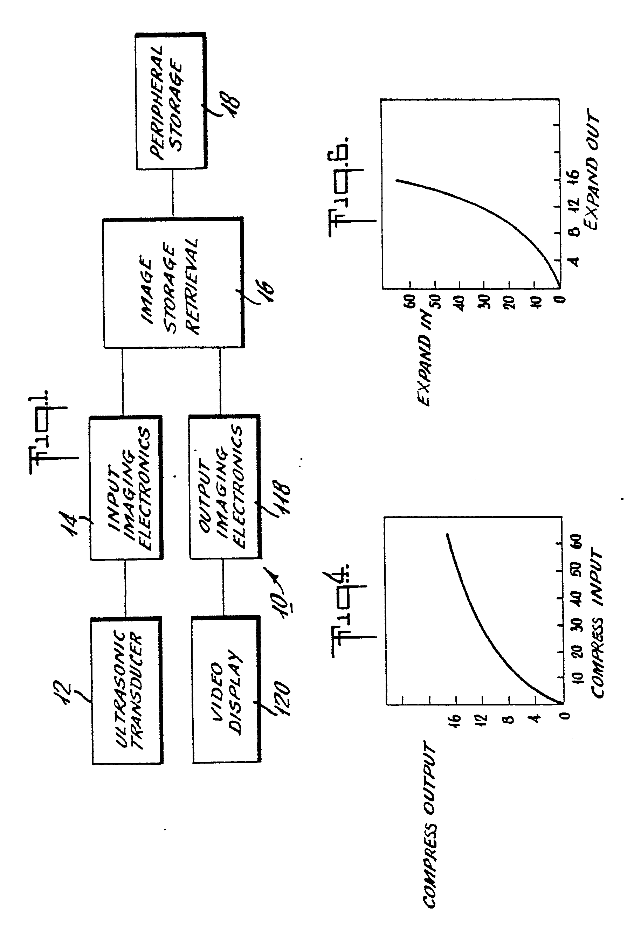

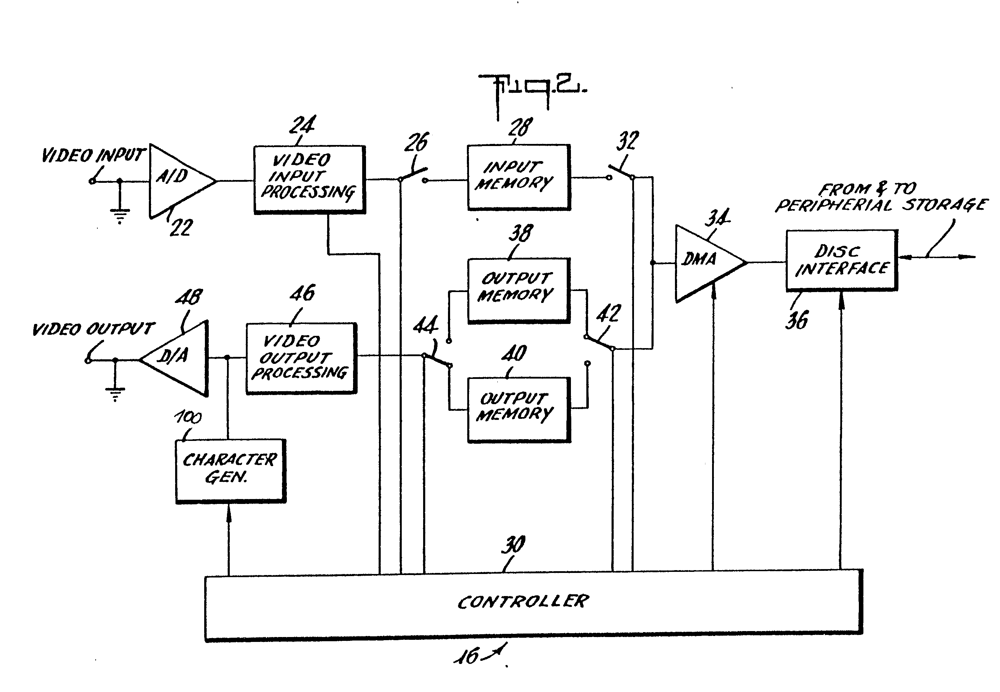

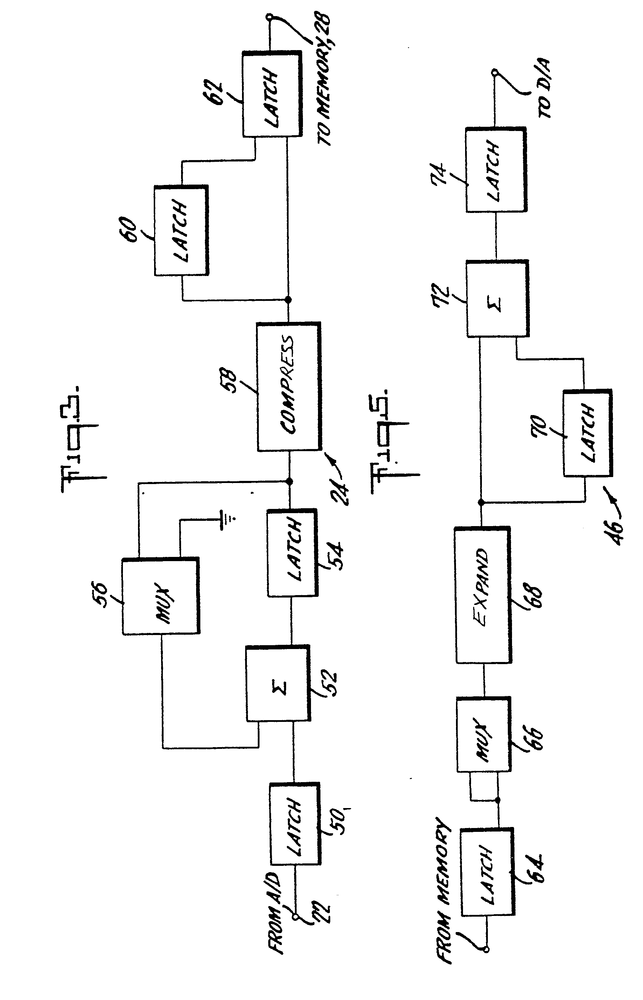

Referring now to Fig. 1, the ultrasonic imaging system of the present invention is shown generally at 10. The imaging system 10 of the present invention has the capability of storing 240 records or frames of information per patient. The ultrasonic imaging system 10 of the present invention employs an ultrasonic transducer 12 of conventional type. Signals received by the ultrasonic transducer 12 are directed to input imaging electronics 14. The input imaging electronics 14 are also of conventional design. The input imaging electronics 14 provides an analog video input signal which is representative of the ultrasonic image detected by the transducer 12. 176 lines of the analog video input signal constitute one frame or record of information from a given patient. The analog video input signal emanating from the input imaging electronics 14 is directed to an image storage and retrieval circuit 16 of the present invention, which will be described in detail in connection with Fig. 2 below. The image storage and retrieval circuit 16 is effective to convert the analog video input signal to digital form and for directing the digital signal to a peripheral storage means 18. The peripheral storage means 18 preferably comprises a three megabyte floppy disk. As mentioned above, when the ultrasonic transducer 12 is utilized for diagnostic purposes, 240 records or frames are digitized and stored in the peripheral storage means 18, per patient. Upon command from a control means described more completely in connection with Fig. 2 below, image storage and retrieval means 16 retrieves patient records from the peripheral storage means 18 and converts such records to analog form. The converted analog signals are then directed to output imaging electronics 118, also of conventional design, which converts the signals to a form suitable for display on a cathode ray tube such as shown at 120.

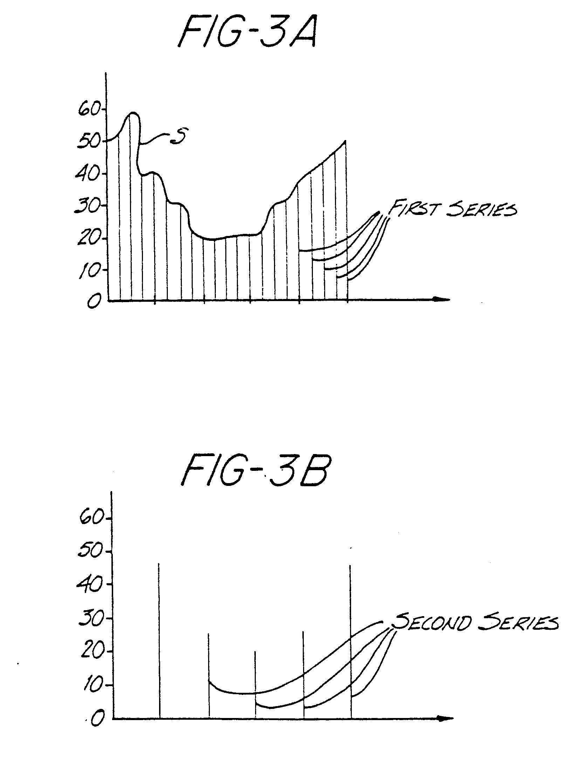

Referring now to Fig. 2, the image storage and retrieval means 16 of the present invention will be described in detail. The image storage and retrieval means 16 of the present invention includes an analog-to-digital converter 22 which is responsive to the analog video input signal from the input imaging electronics 14. The analog to digital converter 22 samples the analog video input signal at a rate of, for example, 10 MHz to produce a first digital input signal comprising a first series of amplitude samples representative of the analog input signal. The first series of samples preferably comprises 512 samples of information per line. Each sample comprises a 6-bit value corresponding to an instantaneous amplitude of the analog input signal. The first series of amplitude samples is directed to a video input processing circuit 24 which will be described in detail in connection with Fig. 3 below.

The output of the video input processing circuit 24 is a second digital signal which is directed through a switch 26 to an input memory 28. The switch 26 operates under the control of a microprocessor control means 30. The output of memory 28 is connected by means of a switch 32, also under the control of the control means 30, to a direct memory access means 34. When the imaging system of the present invention is in an input mode, the microprocessor controller 30 controls switches 26 and 32 so as to store the second digital signal emanating from the video input processing circuit 24 in the input memory 28. After the input memory 28 is filled with one frame of input information, the direct memory access means 34 is activated by the microprocessor controller 30 so as to transfer the stored information from input memory 28 through the disk interface 36 to the peripheral storage means 18. Images are directed to the peripheral storage means 18 at a rate of, for example, four frames per second.

When it is desired to retrieve a patient record from the peripheral storage means 18, the switches 26 and 32 are opened at the command of the microprocessor controller 30. Retrieved information from the peripheral storage means 18 is thereafter directed through the disk interface 36 and the direct memory access means 34 to either one or the other of output memories 38 and 40, the particular one being determined by the position of the switching means 42. The switching means 42 also operates under the control of the microprocessor controller 30. Two memory means 38 and 40 are provided so that retrieval from the storage means 18 to either output memory 38 or 40 can be overlapped in time with the viewing of a previously retrieved image in the alternate output memory 40 or 38. In this way, a continuous visual image is achieved.

When the imaging system of the present invention is operating in an output mode, each of the output memories 38 and 40 contain a second digital signal retrieved from peripheral storage means 18. This retrieved, second digital signal is directed through a switching means 44, also under the control of microprocessor controller 30, to a video output processing circuit 46, which will be described in more detail in connection with Fig. 5 below. The video output processing circuit 46 reconstitutes the first digital signal from the second digital signal input thereto by performing an inverse transform of the type performed in the video input processing circuit 24. The first digital signal output from the video output processing circuit 46 is directed to digital-to-analog converter 48 which produces a video output signal substantially similar to the analog video input signal which was originally received from input imaging electronics 14. The video output signal is an analog signal which is directed to the video display 120 referred to in connection with Fig. 1 above.

In a preferred embodiment of the present invention, the image storage and retrieval means 16 of the present invention further includes a character generating means 100 which is under the control of the microprocessor controller 16. The digital-to-analog converter 48 is responsive to the character generating means 100 so that upon command of the microprocessor controller 30, alphanumeric information may be simultaneously or sequentially displayed along with patient records.

Referring now to Fig. 3, the video input processing circuit 24 shown in Fig. 2 will be described in detail. In accordance with a feature of the present invention, the video input processing circuit 24 includes a means for reducing the data density of ultrasonic images in a direction lateral to the axis of the transducer 12. This means includes a first latch 50, a summing means 52, a second latch 54, and a first digital multiplexer 56. The video input processing circuit 24 also includes in accordance with a preferred aspect of the present invention, a compressing means 58, a third latch 60 and a fourth latch 62.

The first six-bit sample of the first digital input signal from the analog-to-digital converter 22 is directed to the first latch 50 and from there to the summing means 52, as shown. At the summing means 52, the first six-bit sample of the first digital signal is added to the eight-bit output of the first digital multiplexer 56, which output is initially zero. The eight-bit output of the summing means 52 is directed to a second latch 54, the output of which is directed to an input of the first digital multiplexer 56. The second six-bit sample of the first digital input signal from the analog-to-digital converter 22 is then directed to the latch 50 and from there to the summing means 52, where it is added to the last preceding eight-bit sample of that digital signal from the digital multiplexer 56. After preferably four successive iterations, the most significant six bits of the eight bits stored in latch 54 are directed to the compressing means 58. These six bits comprise the average of four successive samples of the first digital signal.

Thus, in accordance with a feature of the present invention, the analog-to-digital converter 22 provides a first series of amplitude samples. At the output of the latch 54, a second series of digital amplitude samples is provided which is related to the first series. The second series of amplitude samples has fewer elements than the first series since each element $b_n$, of the second series of amplitude samples is an average of a group of four elements, $a_m$, $a_m+1$, $a_m+2$, and $a_m+3$ of the first series of samples. Since the second series of samples has but one fourth the number of samples than the first series, and since the second series of samples (preferably after compressing as explained below) is ultimately stored in storage means 18, memory density is appreciably reduced.

While in the embodiment shown in Fig. 3, each element, $b_n$, of the second series of samples is comprised of the average of four elements, $a_m$ through $a_m+3$ of the first series of samples, other arrangements are within the scope of the present invention. For example, the output of latch 54 could also comprise the average of some different number of samples from analog-to-digital converter 22 as opposed to the four samples referred to above. Thus, each element of the second series of samples is related to the elements of the first series of samples by the relationship

$$b_n = \frac{\sum\limits_{i=0}^{i=k-1} a_{nk-i}}{k}$$

where n is a positive integer identifying each element of the second series of samples and k is the number of elements in each group of elements being summed.

The operation of the means for reducing data density of ultrasonic images in a direction lateral to the axis of the transducer 12 will be more fully appreciated by reference to Figs. 3A and 3B. Fig. 3A is a plot of the amplitude versus time of the output of the analog-to-digital converter 22. An analog video input signal S is sampled by the analog-to-digital converter 22 to form the first series of amplitude samples shown in Fig. 3A. However, as may be seen from Fig. 3B, at the output of the latch 54, a second series of amplitude samples is produced, each element of which is an average of a group of samples shown in Fig. 3A. Since the frequency of the analog video input signal S in a direction transverse to the axis of the ultrasonic transducer 12 is relatively low, the second series of amplitude samples shown in Fig. 3B is a reasonably accurate approximation of that video input signal. Since the number of elements in the second series (Fig. 3B) is less than the number of elements in the first series (Fig. 3A) the memory capacity requirements of the peripheral means 18 are substantially reduced.

In accordance with a preferred aspect of the present invention, the compressing means 58 is a random access memory, the output of which is a third digital signal (four bit), the third digital signal being a non-linear function of the samples of the second digital signal input thereto. In this manner, the granularity of the second digital signal is increased in regions of greater diagnostic interest and decreased in regions of lesser interest. The transfer function of the compressing means 58 will be described in detail in connection with Fig. 4 below. Since the output of the compressing means 58 is a four-bit binary number and since the data format employed by most commonly utilized peripheral storage means is an eight-bit format, the output of the compressing means 58 may be converted to an eight-bit format by taking the first four-bit byte from the compressing means 58 and storing it in a latch 60. The next four-bit byte from the compressing means 58 is immediately directed to the fourth latch (eight bits) 62, wherein the four-bit byte stored in latch 60 is combined to form an eight-bit byte directed to the input memory 28.

Referring now to Fig. 4, the transfer function of the compressing means 58 will be described in detail. As may be seen in Fig. 4, when the transfer function (compress output versus compress input) is plotted, the plot is a monotonically increasing curve with a monotonically decreasing slope. Utilizing this transfer function, the granularity of low level input signals is increased at the expense of high amplitude level input signals. In this manner, resolution is enhanced for low level signals at the expense of high level signals, low level signals corresponding to areas of possible malignancy. Thus, from Fig. 4, it may be seen that a change in the value of the input to the compressing means 58 produces a greater change in the value of the output of the compressing means at lower values of the compressing means input than at higher values of that input.

Referring now to Fig. 5, the video output circuit 46 will be described in detail. The video output processing circuit includes a latch 64 to which retrieved eight-bit digital information from the peripheral storage means 18 is directed. The digital signal from the latch 64 is directed to a multiplexer 66 in which it is converted to two four-bit bytes. The digital signal from the multiplexer 66 is then directed to the expanding means 68 in accordance with a preferred aspect of the present invention. The expanding means is operative to convert the retrieved third digital signal from the storage means 18 to a reconstituted second digital signal. The reconstituted digital signal output from the expanding means 68 is a non-linear function of the digital signal input thereto.

The non-linear transfer function of the expanding means 68 will be described in detail in connection with Fig. 6 below.

Referring now to Fig. 6, the transfer function of the expanding means 68 will be seen. As will be seen in Fig. 6, the transfer function of the expanding means 58 (expand input versus expand output) is a monotonically increasing function with a monotonically increasing slope. Thus, the transfer function of the expanding means 68 is the inverse of the transfer function of the compressing means 58. The compressing means 58 preferably comprises a random access memory, each value of the third digital signal stored therein being located at an address determined by a value of the second digital signal input thereto. The expanding means 68 also comprises a random access memory storing the various values of the second digital signal at addresses determined by values of the retrieved third digital signal.

In accordance with the preferred aspect of the present invention, the output of the expanding means 68 is directed to a smoothing circuit comprised of a latch 70 and a summing means 72, the output of the summing means then being directed to another latch 74. Each of the latches 70 and 74 are strobed by clock pulses (from a clock means not shown). The latch 74 is strobed at a rate twice that of the rate utilized to strobe latch 70. In this manner, the output of latch 74 is a digital signal comprising a fourth series of digital samples, each element, $c_n$, of which is related to the elements, $b_n$ of the second series of digital samples by the relationships:

$$c_n = \frac{b_{(n/2)}}{2}$$

where n is a positive even integer; and

$$c_n = \frac{[b_{(n-1/2)} + b_{(n+1/2)}]}{2}$$

where n is a positive odd integer.

Thus, the digital signal emanating from the latch 74, comprises a series of amplitude samples $c_n$, $c_n+1$..., etc., the fourth series being directed to the digital-to-analog converter 48 where an analog signal suitable for video display is produced.

## Claims

1. An ultrasonic imaging system (10), for collecting and displaying body tissue images, comprising:

an ultrasonic transducer (12);

input imaging means (14) for converting signals received by said transducer (12) to an analog video input signal representative of the reflections of the transmitted ultrasonic signals observed along a scan path extending transversely of the direction of ultrasound transmission;

means (22) for producing a first series of digital amplitude samples representative of said video input signal;

means (24, 30) for processing said first series of digital amplitude samples;

converter means (46, 48) for converting the processed digital amplitude samples to an analog video output signal; and

display means (120) responsive to the video output signal for producing an image of said tissue, characterised in that:

the processing means comprises means (24, 30) for forming a second series of digital amplitude samples from said first series, each element of said second series being an average of a different group of elements from said first series, such that said second series contains fewer elements than said first series; and

means (26—44) are provided for storing said second series of samples in and for retrieving these samples from peripheral storage means (18), the converter means (46—48) receiving said retrieved samples.

2. The system of claim 1, wherein said means for forming said second series of samples comprises:

means (50) for storing elements of said first series;

means (52) for summing each stored element of each said group to each other element of its group; and

means (54) for dividing the output of said summing means by the number of elements in said group.

3. The system of claim 2, wherein said means for summing further comprises:

means (52) for adding the amplitude of one element of said group to a current sum of amplitudes to form an updated sum of said amplitudes, and

wherein said means for forming said second series of samples further comprises:

means (54) for storing said updated sum; and

means (56) for providing said updated sum as said current sum to said adding means (52).

4. The system of any one of claims 1 to 3, further comprising:

means (58) for compressing said second series of digital samples to produce a third digital signal, said third digital signal being a first, non-linear function of said second series of digital samples, said means for storing and retrieving being arranged to store said third digital signal in said peripheral storage means and to retrieve it therefrom; and

means (68) for expanding said retrieved third digital signal to reconstitute said second digital amplitude samples and for applying the latter to said converter means (48).

5. The system of any one of claims 1 to 4, wherein said means (50—56) for forming a second series of digital samples from said first series is arranged to derive each element $b_n$ of said second series from the elements $a_n$ of said first series by the relationship

$$b_n = \frac{\sum\limits_{i=o}^{i=k-1} a_{nk-i}}{K}$$

where n is a positive integer identifying each element of said second series and K is the number of elements in each group.

## Patentansprüche

1. Ultraschall-Abbildungssystem (10) für die Sammlung und Darstellung von Körpergewebe-Bildern mit:

einem Ultraschall-Wandler (12);

einer Eingangs-Abbildungseinrichtung (14) für die Umformung von von dem Wandler (12) empfangenen Signalen in ein analoges Video-Eingangssignal, das für die Reflexionen der übertragenen Ultraschall-Signale repräsentativ ist, die längs eines quer zur Richtung der Ultraschall-Übertragung verlaufenden Abtastweges beobachtet wurden;

einer Einrichtung (22) für die Erzeugung einer ersten Folge von digitalen Amplitudenproben, die für das Video-Eingangssignal repräsentativ sind;

einer Einrichtung (24, 30) für die Verarbeitung der ersten Folge von digitalen Amplitudenproben;

einer Umformeinrichtung (46, 48) für die Umformung der verarbeiteten digitalen Amplitudenproben in ein analoges Vidoe-Ausgangssignal; und

einer Darstellungseinrichtung (120), die auf das Video-Ausgangssignal anspricht, um ein Bild des Gewebes zu erzeugen, dadurch gekennzeichnet, daß die Verarbeitungseinrichtung eine Einrichtung (24, 30) aufweist, um eine zweite Folge von digitalen Amplitudenproben aus der ersten Folge zu bilden, wobei jedes Element der zweiten Folge ein Mittelwert einer anderen Gruppe von Elementen aus der ersten Folge ist, so daß die zweite Folge weniger Elemente als die erste Folge enthält; und

daß Einrichtungen (26—44) vorgesehen sind, um die zweite Folge von Proben in einer peripheren Speichereinrichtung (18) zu speichern und diese Proben aus dieser Speichereinrichtung wiederzugewinnen, wobei die Umformeinrichtung (46—48) die wiedergewonnenen Problem empfängt.

2. System nach Anspruch 1, wobei die Einrichtung für die Bildung der zweiten Folge von Proben aufweist:

eine Einrichtung (50) zum Speichern von Elementen der ersten Folge;

eine Einrichtung (52) zum Addieren jedes gespeicherten Elements jeder genannten Gruppe zu jedem anderen Element seiner Gruppe; und

eine Einrichtung (54) zum Dividieren der Ausgabe der Addiereinrichtung durch die Anzahl der Elemente in der genannten Gruppe.

3. System nach Anspruch 2, wobei die Einrichtung zum Addieren weiterhin aufweist:

eine Einrichtung (52) zum Addieren der Amplitude von einem Element der genannten Gruppe zu einer momentanen Summe von Amplituden, um eine aktualisierte Summe der genannten Amplituden zu bilden, und

wobei die Einrichtung zum Bilden der zweiten Folge von Proben weiterhin aufweist:

eine Einrichtung (54) zum Speichern der aktualisierten Summe; und

eine Einrichtung (56) zum Liefern der aktualisierten Summe als momentane Summe an die genannte Addiereinrichtung (52).

4. System nach einem der Ansprüche 1 bis 3, weiterhin aufweisend:

eine Einrichtung (58) zum Komprimieren der zweiten Folge von digitalen Proben, um ein drittes digitales Signal zu erzeugen, welches dritte digitale Signal eine erste nicht-lineare Funktion der zweiten Folge von digitalen Proben ist, wobei bei die Einrichtung zum Speichern und Wiedergewinnen dafür ausgelegt ist, das dritte digitale Signal in der peripheren Speichereinrichtung zu speichern und es daraus zurückzugewinnen; und

eine Einrichtung (68) zum Expandieren des wiedergewonnenen dritten digitale Signals, um die zweiten digitalen Amplitudenproben widerherzustellen, und zum Anlegen letzterer an die Umformeinrichtung (48).

5. System nach einem der Ansprüche 1 bis 4, wobei die Einrichtung (50—56) zum Bilden einer zweite Folge von digitalen Proben aus der ersten Folge dafür ausgeleft ist, jedes Element $b_n$ der zweiten Folge von den Elementen $a_n$ der ersten Folge nach der Beziehung

$$b_n = \frac{\sum\limits_{i=o}^{i=k-1} a_{nk-i}}{K}$$

abzuleiten, wobei n eine positive ganze Zahl, die jedes Element der zweiten Folge identifiziert, und K die Anzahl der Elemente in jeder Gruppe ist.

## Revendications

1. Système (10) de formation d'images par ultrasons, permettant de collecter et d'afficher des images d'un tissu du corps, comportant:

—un transducteur ultrasonore (12);

—des moyens de formation d'images d'entrée (14) servant à convertir des signaux reçus par ledit transducteur (12) en un signal d'entrée vidéo analogique représentatif des réflexions des signaux ultrasonores émis, que l'on observe le long d'une trajectoire de balayage s'étendant transversalement par rapport à la direction d'émission des ultrasons;

—des moyens (22) servant à produire une première série d'échantillons numériques d'amplitude représentatifs dudit signal d'entrée vidéo;

—des moyens (24, 30) servant à traiter ladite première série d'échantillons numériques d'amplitude;

—des moyens convertisseurs (46, 48) servant à convertir les échantillons numériques d'amplitude traités, en un signal de sortie vidéo analogique; et

—des moyens d'affichage (120) sensibles au signal de sortie vidéo pour produire une image dudit tissu, caractérisé en ce que:

—les moyens de traitement comprennent des moyens (24, 30) servant à former une seconde série d'échantillons numériques d'amplitude à partir de ladite première série, chaque élément de ladite seconde série étant une moyenne d'un groupe différent d'éléments de ladit première série, de sorte que ladite seconde série contient un moins grand nombre d'éléments que ladite première série; et

—il est prévu des moyens (26—44) servant à mémoriser ladite seconde série d'échantillons dans des moyens de mémoire périphériques (18) et à les récupérer à partir de ces moyens, les moyens convertisseurs (46—48) recevant lesdits échantillons récupérés.

2. Système selon la revendication 1, dans lequel lesdits moyens servant à former ladite seconde série d'échantillons comprenant:

—des moyens (50) servant à mémoriser des éléments de ladite première série;

—des moyens (52) servant à ajouter chaque élément mémorisé de chacun desdits groupes à chaque autre élément de son groupe; et

—des moyens (54) servant à diviser le signal de sortie desdits moyens additionneurs par le nombre d'éléments dans ledit groupe.

3. Système selon la revendication 2, dans lequel lesdits moyens additionneurs comprennent en outre:

—des moyens (52) pour additionner l'amplitude d'un élément dudit groupe et une somme actuelle d'amplitudes pour former une somme, mise à jour, desdites amplitudes, et

—dans lequel lesdits moyens servant 6 former ladite seconde série d'échantillons comprennent en outre:

—des moyens (54) pour mémoriser ladite somme mise à jour; et

—des moyens (56) pour délivrer ladite somme mise à jour en tant que somme actuelle auxdits moyens additionneurs (52).

4. Système selon l'une quelconque des revendications 1 à 3, comprenant en outre:

—des moyens (58) pour comprimer ladite seconde série d'échantillons numériques de manière à produire un troisième signal numérique, ledit troisième signal numérique étant une première fonction non linéaire de ladite seconde série d'échantillons numériques, lesdits moyens de mémorisation et de récupération étant agencés de manière à mémoriser ledit troisième signal numérique dans lesdits moyens de mémoire périphériques et à le récupérer à partir de ces moyens; et

—des moyens (68) servant à dilater ledit troisième signal numérique récupéré de manière à reconstituer lesdits seconds échantillons numériques d'amplitude, et servant à envoyer ces derniers auxdits moyens convertisseurs (48).

5. Système selon l'une quelconque des revendications 1 à 4, dans lequel lesdits moyens (50—56) servant à former une seconde série d'échantillons numériques à partir de ladite première série sont conçus de manière à dériver chaque élément $b_n$ de ladite seconde série, des éléments $a_n$ de ladite première série conformément à la relation

$$b_n = \frac{\sum\limits_{i=o}^{i=k-1} a_{nk-i}}{K}$$

dans laquelle n est un entier positif repérant chaque élément de ladite seconde série et K est le nombre d'éléments dans chaque groupe.

## Fig.1

```
┌──────────────┐      ┌──────────────┐      ┌──────────────┐      ┌──────────────┐
│  ULTRASONIC  │      │    INPUT     │      │    IMAGE     │      │  PERIPHERAL  │
│  TRANSDUCER  │──────│   IMAGING    │──────│   STORAGE    │──────│   STORAGE    │
│              │      │ ELECTRONICS  │      │  RETRIEVAL   │      │              │
└──────────────┘      └──────────────┘      └──────────────┘      └──────────────┘
    12                    14                    16                    18

┌──────────────┐      ┌──────────────┐
│    VIDEO     │      │    OUTPUT     │
│   DISPLAY    │──────│   IMAGING    │─────────
│              │      │ ELECTRONICS  │
└──────────────┘      └──────────────┘
    120                   118
                     10
```

## Fig.4.

COMPRESS OUTPUT

COMPRESS INPUT

## Fig.6.

EXPAND IN

EXPAND OUT

0 083 985

Fig 2.

VIDEO INPUT

22 A/D

24 VIDEO INPUT PROCESSING

26

28 INPUT MEMORY

32

DMA 34

FROM & TO PERIPHERIAL STORAGE

DISC INTERFACE 36

48 D/A

VIDEO OUTPUT

46 VIDEO OUTPUT PROCESSING

44

38 OUTPUT MEMORY

42

40 OUTPUT MEMORY

100 CHARACTER GEN.

30 CONTROLLER

16

0 083 985

Fig.3.

FROM A/D — LATCH 50 — Σ 52 — LATCH 54 — 24 — COMPRESS 58 — LATCH 60 — LATCH 62 — TO MEMORY, 28

MUX 56

22

Fig.5.

FROM MEMORY — LATCH 64 — MUX 66 — EXPAND 68 — LATCH 70 — 46 — Σ 72 — LATCH 74 — TO D/A

0 083 985

3

# FIG-3A

# FIG-3B